# EUROPÄISCHE PATENTSCHRIFT

(11) **EP 2 774 230 B1**
(45) Veröffentlichungstag und Bekanntmachung des Hinweises auf die Patenterteilung: **30.12.2015**
(21) Anmeldenummer: 12791117.0
(22) Anmeldetag: 31.10.2012
(51) Int. Cl.: H01T 4/08, B60M 5/02

(54) **VORRICHTUNG ZUR AUSWECHSELBAREN AUFNAHME VON, AUCH BLITZSTROMRESISTENTEN, SPANNUNGSSICHERUNGEN**
APPARATUS FOR ACCOMMODATING VOLTAGE-LIMITING DEVICES, INCLUDING VOLTAGE-LIMITING DEVICES RESISTANT TO LIGHTNING CURRENT, IN AN EXCHANGEABLE MANNER
DISPOSITIF DE LOGEMENT REMPLAÇABLE DE LIMITEURS DE TENSION, ÉGALEMENT RÉSISTANTS À UN COURANT DE FOUDRE

(30) Priorität: 02.11.2011 DE 202011107407 U
(43) Veröffentlichungstag der Anmeldung: 10.09.2014
(73) Patentinhaber: Dehn + Söhne GmbH + Co. KG, 92318 Neumarkt/Opf. (DE)
(72) Erfinder: SLAGTER, Johan, Port Melbourne VIC 3207 (AU)
(74) Vertreter: Kruspig, Volkmar
(86) Internationale Anmeldenummer: PCT/EP2012/071591
(87) Internationale Veröffentlichungsnummer: WO 2013/064550

(56) Entgegenhaltungen:
- DE-C- 917 736
- US-A- 3 274 447
- US-A- 3 569 786

## Beschreibung

Die Erfindung betrifft eine Vorrichtung zur auswechselbaren Aufnahme von, auch blitzstromresistenten, Spannungssicherungen mit Kontaktflächen zum Schutz von betriebsmäßig nicht geerdeten Anlagenteilen, wie Bahnunterwerke oder Oberleitungsausrüstungen, bestehend aus einer Schraubkappe mit Innenhohlraum zur Aufnahme der Spannungssicherung, einem Anschlussterminal mit Kontaktfläche für die Spannungssicherung und einem Isolierkörper gemäß Anspruch 1.

Aus dem Produktkatalog 2010, Fahrleitungsmaterial für den Nah- und Fernverkehr, der Siemens AG sind Spannungssicherungen für die Befestigung an der Schiene, jeweils ausgeführt auf bestimmt Schienenfußbreiten, vorbekannt. Weiterhin existieren Spannungssicherungen für die Befestigung am Mast oder am Bauwerk einer bahntechnischen Anlage. Die Spannungssicherungen weisen Klemmstücke auf, die mit Hilfe eines Bolzens am Schienenfuß fixiert oder an einem Mastteil befestigt werden. Weiterhin ist ein Anschluss für ein Erdungsseil vorhanden und ein Raum zur Aufnahme eines Sicherung sein satzes ausgebildet (siehe www.siemens.com/mobility).

Bekanntermaßen können elektrische Bahnen andere elektrotechnische Einrichtungen und Anlagenteile beeinflussen. So besteht die Möglichkeit, dass im Betrieb erhöhte Schienenpotentiale auftreten. Ebenso können Oberleitungssysteme Überspannungen oder Spannungsspitzen ausgesetzt sein, die die vorhandene Systemisolation gefährden.

Blitzresistente Spannungssicherungen haben die Aufgabe, betriebsmäßig nicht geerdete Anlagenteile beim Überschreiten einer bestimmte Spannung kurzschlusssicher zu erden. Dies verhindert, dass Personen und Anlagenteile durch unzulässig hohe Spannungen gefährdet werden. Weiterhin können durch den Einsatz einer Spannungssicherung Streuströme vermieden und der geforderte Schutz angrenzender Anlagen erreicht werden.

Um Unterwerke und Oberleitungsausrüstungen der Bahn gegen Überspannungen zu schützen, die z.B. infolge von Blitzeinschlägen auftreten können, ist es notwendig, Schutzeinrichtungen einzubauen. Entsprechende Überspannungsableiter eignen sich dabei je nach Ausführung zur Verwendung sowohl in freier Umgebung als auch im Innenraum.

Funkenstreckeneinsätze für eine energietechnische Abwendung auch im Bahnbereich werden von der Firma DEHN + SÖHNE GmbH ± Co. KG, Neumarkt, unter der Bezeichnung SD-S, z.B. für eine Ansprechgleichspannung von 550V angeboten. Derartige Funkenstreckeneinsätze dienten der galvanischen Trennung von isolierten Gleisabschnitten und geerdeten Anlagenteilen und ermöglichen einen sicheren Potentialausgleich durch hochstromfestes Verschweißen der im Funkenstreckeneinsatz vorhandenen Elektroden im Falle eines Fahrleitungs-Kurz- bzw. Erdschlusses. Darüber hinaus können Überspannungen ohne Kurzschlussbildung mit einem integrierten Gasableiter störungsfrei beseitigt werden. Die Funkenstreckeneinsätze der Firma DEHN + SÖHNE GmbH + Co. KG, Neumarkt, sind zum Einbau in Spannungsdurchschlagsicherungen bzw. Schienenadaptern geeignet und weisen diesbezüglich angepasste Außenabmessungen auf.

Aus der DE 917 736 B, die den Oberbegriff des Anspruchs 1 offenbart, ist eine auswechselbare elektrische DurchschlagSicherung mit Schraubkappe vorbekannt.

Bei dieser vorbekannten technischen Lösung wird von einer in einem Isoliergehäuse untergebrachten Sicherung ausgegangen, wobei das Isoliergehäuse elektrische Anschlüsse besitzt, die mit der zu schützenden Anlage und Erdpotential verbindbar sind. Die Überschlagsstrecke wird durch zwei Elektroden und eine dazwischen liegende gelochte Isolierscheibe gebildet. Eine Elektrode liegt dabei auf einem ersten Anschlußstück unmittelbar auf, wobei die weitere Elektrode über einen Gewindeeinsatz der Schraubkappe und einen weiteren Gewindering mit dem zweiten Anschlussstück verbunden ist.

Durch Herausdrehen der Schraubkappe mit Gewindeteil kann die Elektrodeanordnung entnommen und gegebenenfalls ausgewechselt werden.

Aus dem Vorgenannten ist es daher Aufgabe der Erfindung, eine weiterentwickelte Vorrichtung zur auswechselbare Aufnahme von, auch blitzstromresistenten, Spannungssicherungen mit Kontaktflächen zum Schutz von betriebsmäßig nicht geerdeten Anlagenteilen wie Bahnunterwerken oder Oberleitungsausrüstungen anzugeben, welche so ausgeführt ist, dass ein leichter Zugang zur Spannungssicherung besteht und eine Montage der Vorrichtung außerhalb einer unmittelbaren Gefahrenzone z.B. eines Bahngleises möglich ist. Dabei soll die Vorrichtung nur aus wenigen Teilen bestehen und über die notwendige Dichtheit für in üblicherweise erfolgenden Einsatz im Freien verfügen.

Die Lösung der Aufgabe der Erfindung erfolgt durch eine Vorrichtung gemäß der Merkmalskombination nach Anspruch 1, wobei die Unteransprüche mindestens zweckmäßige Ausgestaltungen und Weiterbildungen umfassen.

Es wird demnach von einer Vorrichtung zur auswechselbaren Aufnahme von, auch blitzstromresistenten, Spannungssicherungen mit Kontaktflächen zum Schutz von betriebsmäßig nicht geerdeten Anlagenteilen, wie Bahnunterwerke oder Oberleitungsausrüstungen, ausgegangen. Unter einer Spannungssicherung wird auch ein Funkenstreckeneinsatz verstanden, der zur galvanischen Trennung von isolierten Gleisabschnitten und geerdeten Anlagenteilen dient und der einerseits einem sicheren Potentialausgleich durch hochstromfestes Verschweißen der Elektroden im Falle eines Kurz- der Erdschlusses dient, aber andererseits auch in der Lage ist, Überspannungen ohne Kurzschlussbildung abzuleiten.

Die Vorrichtung umfasst weiterhin eine Schraubkappe mit Innenhohlraum zur Aufnahme der Spannungssicherung, ein Anschlussterminal mit Kontaktfläche für die Spannungssicherung und einen ein- oder mehrteiligen Isolierkörper.

Erfindungsgemäß ist das Anschlussterminal als Gewindebolzen mit einem Bolzenkopf ausgebildet. Der Bolzenkopf besitzt einen bezogen auf den Gewindeabschnitt größeren Durchmesser und wird bevorzugt durch einen Umformvorgang gefertigt.

Der erfindungsgemäße Isolierkörper ist buchsenförmig ausgeführt und besitzt einen Innendurchmesser, der geeignet ist zur Aufnahme des vorerwähnten Gewindebolzens, wobei im Montagezustand bei einer ersten Ausführungsform der Bolzenkopf an einer ersten Seite eines umlaufenden Bundes des Isolierkörpers anliegt.

Weiterhin ist eine Grundplatte mit einem zur Schraubkappe komplementären Gewindefortsatz vorgesehen, wobei die Grundplatte eine Durchgangsöffnung umfasst, um den buchsenförmigen Isolierkörper aufzunehmen, welcher bei der ersten Ausführungsform mit seiner zweiten Seite des Bundes mit einem Stirnseitenabschnitt des Gewindefortsatzes in Anlage gelangt. Hierdurch ergibt sich eine im Wesentlichen konzentrische Anordnung von Gewindebolzen, Isolierkörper und Durchgangsöffnung in der Grundplatte.

Die Schraubkappe kann einen zum Innenhohlraum in Richtung Bolzenkopf weisenden Vorsprung besitzen, wobei der Vorsprung einerseits und der Bolzenkopf andererseits die Kontaktflächen der eingesetzten Spannungssicherung elektrisch kontaktieren und die Spannungssicherung mechanisch fixieren. Alternativ kann die Innenseite der Schraubkappe als Kontaktfläche ausgebildet sein.

Gemäß erster Ausführungsform ist eine mit einem Durchbruch zum Aufschieben auf den Gewindebolzen versehene isolierende Druckkappe ausgebildet, wobei zwischen Druckkappe und Grundplatte ein Abschnitt des jeweils zu schützenden Anlagenteils fixiert und elektrisch angeschlossen ist. Üblicherweise ist im entsprechenden Anschnitt des zu schützenden. Anlagenteils eine Bohrung vorhanden, durch die der Gewindebolzens mit Isolierkörper hindurchgeführt wird und wobei die Grundplatte einerseits und die Druckkappe anderseits am die Bohrung umgebenden Bereich des Anlagenteils zur Anlage kommen.

Der Außendurchmesser des buchsenförmigen Isolierkörpers ist dabei an die vorerwähnte, im Anlagenteil einzubringende oder dort vorhandene Befestigungsbohrung angepasst.

Der buchsenförmige Isolierkörper weist bei einer Ausführungsform eine sich vom Bund in Richtung Vorsprung der Schraubkappe erstreckende, eine Isolierwand bildende Kragung auf. In den von der Kragung umschlossenen Innenraum kann dann die Spannungssicherung eingelegt werden und in Kontakt mit dem Bolzenkopf und dem Vorsprung der Schraubkappe gelangen. Mit dem Festdrehen der Schraubkappe ergibt sich hier die gewünschte Lagesicherheit und Stromtragfähigkeit.

Diesbezüglich weist der Gewindefortsatz der Grundplatte ein Außengewinde und die Schraubkappe ein hierzu komplementäres Innengewinde auf.

Zum Fixieren der Gesamtanordnung ist eine erste Befestigungsmutter auf dem Gewindebolzen vorgesehen, wobei der verbleibende Gewindebolzenabschnitt zur Aufnahme z.B. eines Kabelschuhs und einer zweiten Befestigungsmutter dient.

Um die entsprechenden Befestigungskräfte auf die Schraubkappe aufbringen zu können, ist im oder am Schraubkappenkopf eine Schlüsselfläche ausgebildet Diese Schlüsselfläche kann z.B. als Innenvielkant ausgeführt sein.

Über ein erfindungsgemäßes Verschieben der isolierenden Druckkappe bezogen auf deren Position zum Gewindebolzen oder zum buchsenförmigen Isolierkörper kann eine Anpassung an unterschiedliche Abmessungen, insbesondere Dickenabmessungen, des Befestigungsabschnitts des jeweils zu schützenden Anlagenteils erfolgen.

Bei einer zweiten Ausführungsform wird von einer zweiteiligen Gestaltung des Isolierkörpers ausgegangen. Dieser besteht aus einem ersten Buchsenkörper mit Außenbund und einem zweiten Buchsenkörper mit Innenbund. Der erste Buchsenkörper mit Außenbund kann ebenfalls erfingdungsgemäß bezogen auf dessen Position zum Gewindebolzen bzw. zum zweiten Buchsenkörper mit Innenbund verschoben werden. Hierdurch kann ebenfalls eine Anpassung an unterschiedliche Abmessungen, insbesondere Dickenabmessungen, des Befestigungsabschnitts des jeweils zu schützenden Anlagenteils erfolgen.

Bei der vorerwähnten zweiten Ausführungsform ist der Grundkörper als Deckel mit U-förmigem Querschnitt und einer Schlüsselfläche ausgebildet, wobei an der Deckelinnenwandung ein Gewinde vorgesehen ist, welches zu einem Außengewinde der Schraubkappe komplementär ist. Bei der zweiten Ausführungsform geschieht die Montage der Vorrichtung wie folgt.

Schraubkappe mit Grundkörper und dem zweiten Büchsenkörper mit Innenbund sowie Gewindebolzen werden, auch wahlweise mit dem Spannungssicherungseinsatz, handfest verschraubt.

Die so vormontierte Baugruppe kann dann an der Anlage, z.B. einem Mast, mit dem ersten Buchsenkörper mit Außenbund, einer entsprechenden Unterlagscheibe und einer Mutter vormontiert werden. Dabei sollte die Schlüsselfläche für den Grundkörper gut zugänglich sein. Im Anschluss wird eine erste Befestigungsmutter angezogen. Danach wird die Schraubkappe mit dem Grundkörper fest verschraubt und es erfolgt ein Anbringen der Anschlussleitungen.

Bei einem Austausch des Spannungssicherungseinsatzes wird die Schraubkappe über den am Kopf befindlichen Innenvielkant gelöst, der Spannungssicherungseinsatz gewechselt und unter Beachtung der Sauberkeit der Kontaktflächen die Schraubkappe wieder montiert. Gegebenenfalls ist an der Schlüsselfläche des Grundkörpers gegenzuhalten.

Zur Erfüllung der elektrischen Funktionen ist die Schraubkappe, die Grundplatte und der Gewindebolzen mit Bolzenkopf aus einem leitfähigen Material gefertigt.

Die Erfindung soll nachstehend anhand von Ausführungsbeispielen sowie unter Zuhilfenahme von Figuren näher erläutert werden.

Hierbei zeigen:
- Fig. 1: eine erste Längsschnittdarstellung einer ersten Ausführungsform der erfindungsgemäßen Vorrichtung bezogen auf einen Befestigungsabschnitt mit einer ersten Dicke;
- Fig. 2: eine Darstellung ähnlich derjenigen nach Fig. 1, jedoch bezogen auf einen Befestigungsabschnitt mit einer zweiten Dicke, die größer als die Dicke des Befestigungsabschnitts nach Fig. 1 ist, und
- Fig. 3: eine Längsschnittdarstellung einer zweiten Ausführungsform der Erfindung mit zweiteiligem Isolierkörper, der aus einem ersten Buchsenkörper mit Außenbund sowie einem zweiten Buchsenkörper mit Innenbund besteht und wobei der Grundkörper als Deckel mit Schlüsselfläche ausgebildet ist sowie ergänzend an der Deckelinnenwandung ein Gewinde vorliegt, welches zu einem Außengewinde der Schraubkappe komplementär ist.

Die Vorrichtung zur auswechselbaren Aufnahme von, auch blitzstromresistenten, Spannungssicherungen gemäß den Figuren geht zunächst aus von einem Anschlussterminal in der Gestalt eines Gewindebolzens 003.

Dieser Gewindebolzen weist einen Bolzenkopf 10 auf, der einen bezogen auf den Gewindeabschnitt im Bereich mit dem Bezugszeichen 003 größeren Durchmesser aufweist.

Ein buchsenförmigen Isolierkörper 11 besitzt einen Innendurchmesser, geeignet zur Aufnahme des Gewindebolzens 003, wobei, wie aus den Darstellungen ersichtlich, im Montagezustand der Bolzenkopf 10 an einer ersten Seite eines umlaufende Bundes 12 des buchsenförmigen Isolierkörpers 11 anliegt.

Weiterhin ist eine Grundplatte 001 mit einem zu einer Schraubkappe 002 komplementären Gewindefortsatz 13 vorgesehen, wobei die Grundplatte 001 eine erkennbare Durchgangsöffnung umfasst, um den buchsenförmigen Isolierkörper 11 aufzunehmen.

Der buchsenförmige Isolierkörper 11 gelangt mit seiner zweiten Seite des umlaufenden Bundes 12 mit einem stirnseitigen Abschnitt des Gewindefortsatzes 13 in Anlage, so dass sich eine im Wesentlichen konzentrische Anordnung von Gewindebolzen 003, Isolierkörper 11 und der Durchgangsöffnung in der Grundplatte 001 ergibt.

Die Schräubkappe 002 umfasst ergänzend einen zum Innenhohlraum in Richtung Bolzenkopf 10 weisenden Vorsprung 14, wobei der Vorsprung 14 einerseits und der Bolzenkopf 10 andererseits die Kontaktflächen der nicht gezeigten Spannungssicherung berührt.

Darüber hinaus ist eine mit einem Durchbruch zum Aufschieben auf den Gewindebolzens 003 versehene, isolierende Druckkappe 005 ausgebildet.

Zwischen der Druckkappe 005 und der Grundplatte 001 wird ein Abschnitt des jeweils zu schützenden Anlagenteils fixiert und elektrisch kontaktiert.

Es ist dabei für den Fachmann verständlich, dass der Außendurchmesser des buchsenförmigen Isolierkörpers 11 einer im Anlagenteil (nicht gezeigt) einzubringenden Befestigungsbohrung entspricht.

Bei der Ausgestaltung gemäß dem Ausführungsbeispiel besitzt der buchsenförmige Isolierkörper 11 eine sich vom umlaufenden Bund 12 in Richtung Vorsprung 14 der Schraubkappe 002 erstreckende, eine Isolierwand bildende Kragung 15. Hierdurch kann im verbleibenden Raum 16 die entsprechende Spannungssicherung verschiebefrei positioniert werden.

Der Gewindefortsatz 13 der Grundplatte 001 besitzt ein Außengewinde, wobei die Schraubkappe 002 ein hierzu komplementäres Innengewinde aufweist.

Zum Fixieren der Vorrichtung ist auf dem Gewindebolzen 003 eine erste Befestigungsmutter 17 vorhanden. Diese erste Befestigungsmutter 17 übt beim Anziehen über eine Scheibe 007 und eine Dichtung 006 eine Druckkraft auf die Kappe 005 aus, so dass letztendlich ein Verspannen bezogen auf den Befestigungsabschnitt des zu schützenden Anlagenteils möglich wird.

Der verbleibende freie Abschnitt des Gewindebolzens 003 kann genutzt werden, um einen Kabelschuh (nicht gezeigt) aufzuschieben und um diesen dann mit Hilfe eines Federrings 008 sowie einer weiteren Mutter 009 zu befestigen, so dass der gewünschte Anschluss z.B. gegen Erde realisiert werden kann.

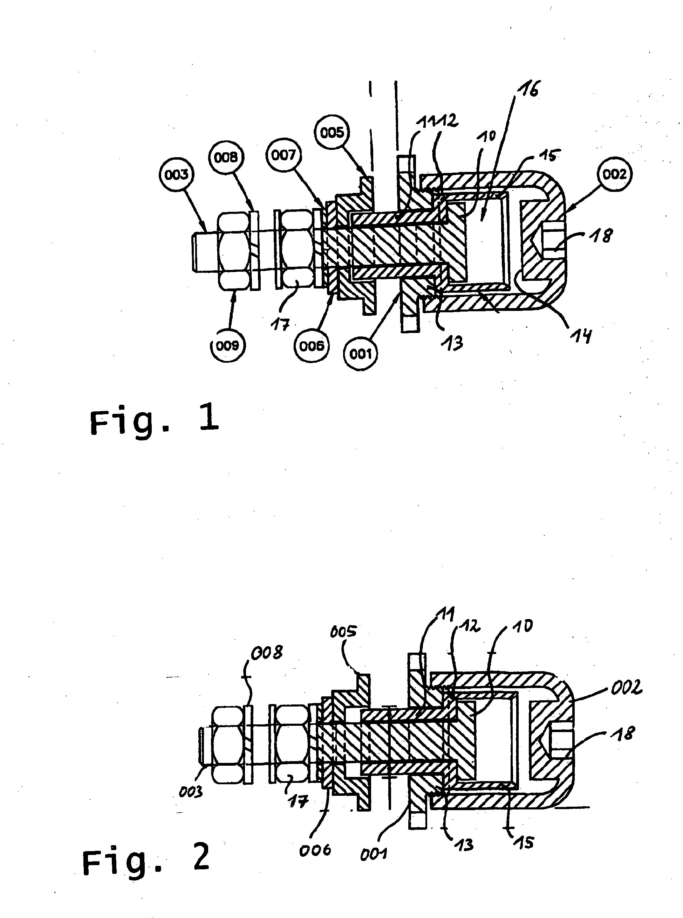

Bei der Ausführungsform gemäß den Fig. 1 und 2 weist die Schraubkappe 002 im Schraubkappenkopf einen Rücksprung mit Innenvielkant 18 auf. Der Innenvielkant wird genutzt, um die Schraubkappe, gegebenenfalls mit Hilfe eines Drehmomentschlüssels, anzuziehen oder zu lösen.

Wie sich aus dem Vergleich der Fig. 1 und 2 ergibt, kann über ein Verschieben der isolierenden Druckkappe 005, die bevorzugt einen hutförmigen Querschnitt aufweist, bezogen auf deren Position zum Gewindebolzen 003 oder zum buchsenförmigen Isolierkörper 11 eine Anpassung an unterschiedliche Abmessungen des Befestigungsabschnitts des jeweils zu schützenden Anlagenteile vorgenommen werden.

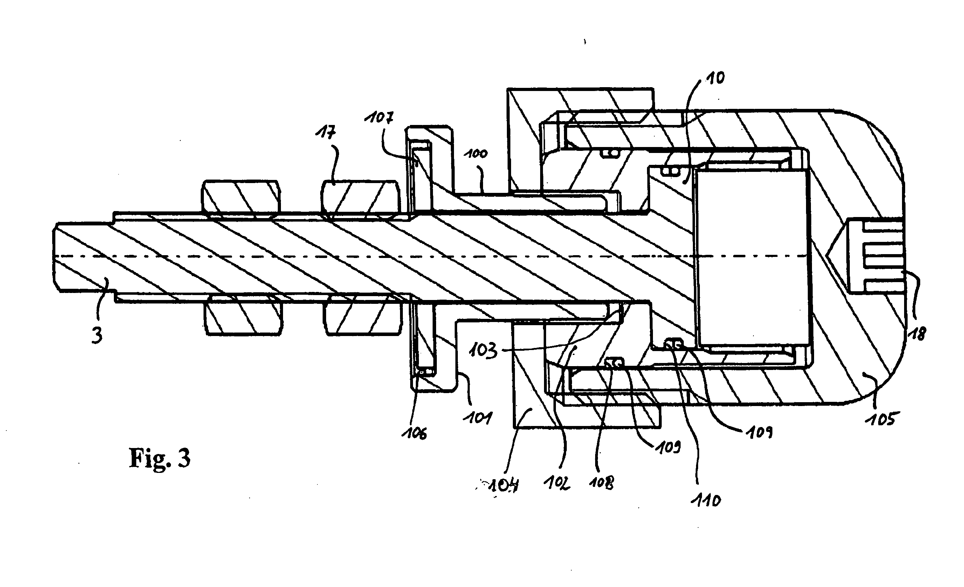

Bei der Ausführungsform gemäß zweitem Ausführungsbeispiel nach Schnittdarstellung der Fig. 3 wird von einem zweiteiligen Isolierkörper ausgegangen, der aus einem ersten Buchsenkörper 100 mit Außenbund 101 und einem zweiten Buchsenkörper 102 mit Innenbund 103 besteht. Am Innenbund 103 liegt der Bolzenkopf 10 an.

Der Buchsenkörper 100 mit Außenbund 101 ist bezogen auf den Gewindebolzen 3 verschieblich.

Der Grundkörper gemäß Fig. 3 ist als Deckel 104 mit U-förmigem Querschnitt und einer Schlüsselfläche ausgebildet.

An der Deckelinnenwandung liegt ein Gewinde vor, welches zu einem Außengewinde der Schraubkappe 105 komplementär ausgeführt ist. Auch bei der Ausführungsform nach Fig. 3 ist die Schraubkappe 105 mit einem Innenvierkant 18 versehen.

Der Außenbund 101 des ersten Buchsenkörpers 100 weist noch eine Rücksprungfläche 106 auf, die eine metallische Druckscheibe 107 aufnehmen kann, um die von der Befestigungsmutter 17 erzeugte Kraft gleichmäßig zu verteilen.

Ergänzend besteht die Möglichkeit, im zweiten Buchsenkörper 102 eine umlaufende Nut 108 auszubilden, die einen Dichtring 109 aufnimmt. Ebenso kann im Burhsenkopf 10 eine umlaufenden Nut 110 vorhanden sein, die ebenfalls eine Dichtung 109 aufnimmt.

## Patentansprüche

1. Vorrichtung zur auswechselbaren Aufnahme von, auch blitzstromresistenten, Spannungssicherungen mit Kontaktflächen zum Schutz von betriebsmäßig nicht geerdeten Anlagenteilen wie Bahnunterwerke oder Oberleitungsausrüstungen, bestehend aus einer Schraubkappe (2) mit Innenhohlraum (16) zur Aufnahme der Spannungssicherung, einem Anschlussterminal (3) mit Kontaktfläche für die Spannungssicherung und einem ein- oder mehrteiligen Isolierkörper (11),
**dadurch gekennzeichnet, dass**
- das Anschlussterminal als Gewindebolzen (3) mit einem Bolzenkopf (10) ausgebildet ist, wobei der Bolzenkopf (10) einen bezogen auf den Gewindeabschnitt größeren Durchmesser aufweist,
- der Isolierkörper (11) buchsenförmig mit einem Innendurchmesser, geeignet zur Aufnahme des Gewindebolzens (3) ausgeführt ist, wobei im Montagezustand der Bolzenkopf (10) am Isolierkörper (11) anliegt,
- ein Grundkörper oder eine Grundplatte (1) mit einem zur Schraubkappe (2) komplementären Gewindefortsatz (13) mit Innen- oder Außengewinde vorgesehen ist, wobei die Grundplatte (1) oder der Grundkörper eine Durchgangsöffnung umfasst, um den buchsenförmigen ein- oder mehrteiligen Isolierkörper (11) aufzunehmen, wobei sich eine im Wesentlichen konzentrische Anordnung von Gewindebolzen (3), Isolierkörper (11) und Durchgangsöffnung der Grundplatte (1) ergibt, und
- die Schraubkappe (1) eine zum Innenhohlraum (16) in Richtung Bolzenkopf (10) weisende Kontaktfläche (14) besitzt, wobei die Kontaktfläche einerseits und der Bolzenkopf (10) andererseits dazu ausgebildet sind, die Kontaktflächen der Spannungssicherung zu kontaktieren.

2. Vorrichtung nach Anspruch 1,
**dadurch gekennzeichnet, dass**
eine mit einem Durchbruch zum Aufschieben auf den Gewindebolzen (3) versehene isolierende Druckkappe (5) ausgebildet ist, wobei zwischen Druckkappe (5) und Grundplatte (1) ein Abschnitt des jeweils zu schützenden Anlagenteils fixiert und elektrisch kontaktiert werden kann.

3. Vorrichtung nach Anspruch 1 oder 2,
**dadurch gekennzeichnet, dass**
im Montagezustand der Bolzenkopf (10) an einer ersten Seite eines umlaufenden Bundes (12) Isolierkörpers (11) anliegt,

4. Vorrichtung nach Anspruch 1, 2 oder 3,
**dadurch gekennzeichnet, dass**
der buchsenförmige Isolierkörper (11) mit seiner zweiten Seite des umlaufenden des umlaufenden Bundes (12) mit einem Stirnseitenabschnitt des Gewindefortsatzes (13) in Anlage gelangt.

5. Vorrichtung nach Anspruch 1 bis 4,
**dadurch gekennzeichnet, dass**
der Außendurchmesser des buchsenförmigen Isolierkörpers (11) einer im Anlagenteil einzubringenden oder dort vorhandenen Befestigungsbohrung entspricht.

6. Vorrichtung nach Anspruch 3,
**dadurch gekennzeichnet, dass**
der buchsenförmige Isolierkörper (11) einen sich von dem Bund in Richtung Vorsprung der Schraubkappe (2) erstreckende, eine Isolierwand bildende Kragung (15) besitzt.

7. Vorrichtung nach einem der vorangegangenen Ansprüche,
**dadurch gekennzeichnet, dass**
der Gewindefortsatz (13) der Grundplatte (1) ein Außengewinde und die Schraubkappe (2) ein hierzu komplementäres Innengewinde oder umgekehrt aufweist.

8. Vorrichtung nach einem der vorangegangenen Ansprüche,
**dadurch gekennzeichnet, dass**
zum Fixieren eine erste Befestigungsmutter (17) auf dem Gewindebolzen (3) aufgebracht ist, wobei der verbleibende Gewindebolzenabschnitt zu Aufnahme eines Kabelschuhs oder dergleichen und einer zweiten Befestigungsmutter (9) dient.

9. Vorrichtung nach einem der vorangegangenen Ansprüche,
**dadurch gekennzeichnet, dass**
im oder am Schraubkappenkopf eine Schlüsselfläche ausgebildet ist.

10. Vorrichtung nach Anspruch 9,
**dadurch gekennzeichnet, dass**
die Schlüsselfläche als Innenvielkant (18) ausgeführt ist.

11. Vorrichtung nach einem der vorangegangenen Ansprüche,
**dadurch gekennzeichnet, dass**
über ein Verschieben der isolierenden Druckkappe (5) bezogen auf deren Position zum Gewindebolzen (3) oder zum buchsenförmigen Isolierkörper (11) eine Anpassung an unterschiedliche Abmessungen des Befestigungsabschnitts der jeweils zu schützenden Anlage erfolgt.

12. Vorrichtung nach Anspruch 1,
**dadurch gekennzeichnet, dass**
bei einer zweiteiligen Ausführungsform des Isolierkörpers (11) dieser aus einem ersten Buchsenkörper (100) mit Außenbund (101) und einem zweiten Buchsenkörper (102) mit Innenbund (103) besteht.

13. Vorrichtung nach Anspruch 1 und 12,
**dadurch gekennzeichnet, dass**
der Grundkörper als Deckel (104) mit U-förmigem Querschnitt und Schlüsselfläche ausgebildet ist, wobei an der Deckelinnenwandung ein Gewinde vorhanden ist, welches zu einem Außengewinde der Schraubkappe (105) komplementär ist.

14. Vorrichtung nach einem der vorangegangenen Ansprüche,
**dadurch gekennzeichnet, dass**
die Schraubkappe (2), die Grundplatte (1) und der Gewindebolzen (3) mit Bolzenkopf (10) aus einen leitfähigen Material bestehen.

## Claims

1. An apparatus for exchangeably accommodating voltage-limiting devices, including those resistant to lightning current, having contact surfaces for protecting system parts which are not grounded during normal operation such as substations or overhead line equipment, consisting of a screw cap (2) having an inner cavity (16) for accommodating the voltage-limiting device, a connection terminal (3) having a contact surface for the voltage-limiting device and a one-piece or multi-piece insulating body (11),
**characterized in that**
- the connection terminal is designed as a threaded bolt (3) having a bolt head (10), wherein the bolt head (10) has a larger diameter relative to the threaded section,
- the insulating body (11) is in the form of a bushing and has an inner diameter suited to accommodating the threaded bolt (3), wherein the bolt head (10) abuts against the insulating body (11) in the assembled state,
- a base body or a base plate (1) is provided with a threaded extension (13) of internal or external thread complementary to the screw cap (2), wherein the base plate (1) or the base body has a passage opening in order to accommodate the bushing-shaped one-piece or multi-piece insulating body (11), wherein a substantially concentric arrangement of threaded bolt (3), insulating body (11) and passage opening of the base plate (1) results, and
- the screw cap (2) has a contact surface (14) facing the inner cavity (16) in the direction of the bolt head (10), wherein the contact surface on the one hand and the bolt head (10) on the other are designed to contact the contact surfaces of the voltage-limiting device.

2. The apparatus according to claim 1,
**characterized in that**
an insulating pressure cap (5) provided with an opening for pushing onto the threaded bolt (3) is configured, wherein a section of the respective system part to be protected can be fixed and electrically contacted between the pressure cap (5) and the base plate (1).

3. The apparatus according to claim 1 or 2,
**characterized in that**
the bolt head (10) abuts against a first side of a circumferential shoulder (12) of the insulating body (11) in the assembled state.

4. The apparatus according to claim 1, 2 or 3,
**characterized in that**
the bushing-shaped insulating body (11) abuts against a front side section of the threaded extension (13) by the second side of its circumferential shoulder (12).

5. The apparatus according to claims 1 to 4,
**characterized in that**
the outer diameter of the bushing-shaped insulating body (11) corresponds to a mounting hole to be cut into or already provided on a system part.

6. The apparatus according to claim 3,
**characterized in that**
the bushing-shaped insulating body (11) has a collar (15) forming an insulating wall extending from the shoulder toward the projection of the screw cap (2).

7. The apparatus according to any one of the preceding claims,
**characterized in that**
the threaded extension (13) of the base plate (1) has an external thread and the screw cap (2) has a complementary internal thread or vice versa.

8. The apparatus according to any one of the preceding claims,
**characterized in that**
a first securing nut (17) is placed on the threaded bolt (3) to effect fixation, wherein the remaining section of the threaded bolt serves to accommodate a cable lug or the like and a second securing nut (9).

9. The apparatus according to any one of the preceding claims,
**characterized in that**
a spanner flat is formed in or on the screw cap head.

10. The apparatus according to claim 9,
**characterized in that**
the spanner flat is designed as a spline socket head (18).

11. The apparatus according to any one of the preceding claims,
**characterized in that**
an adjusting to different dimensions of the securing section of the respective equipment to be protected is realized by displacing the insulating pressure cap (5) relative to its position to the threaded bolt (3) or to the bushing-shaped insulating body (11).

12. The apparatus according to claim 1,
**characterized in that**
in a two-piece embodiment of the insulting body (11), same consists of a first bushing body (100) having an outer shoulder (101) and a second bushing body (102) having an inner shoulder (103).

13. The apparatus according to claim 1 and 12,
**characterized in that**
the base body is designed as a cover (104) having a U-shaped cross section and a spanner flat, wherein a thread complementary to the external thread of the screw cap (105) is provided on the inner wall of the cover.

14. The apparatus according to any one of the preceding claims,
**characterized in that**
the screw cap (2), the base plate (1) and the threaded bolt (3) with bolt head (10) are made from a conductive material.

## Revendications

1. Dispositif destiné à la réception, de manière interchangeable, de limiteurs de tension, également résistants aux courants de foudre, avec des surfaces de contact pour la protection de partiels d'installation qui en service ne sont pas mises à la terre, comme des sous-structures de voies ou des équipements de lignes aériennes, constitué d'un capuchon à visser (2) avec une cavité intérieure (16) pour la réception du limiteur de tension, d'une borne de connexion (3) avec une surface de contact pour le limiteur de tension, et d'un corps isolant (11) en une ou plusieurs pièces,
**caractérisé en ce que**
la borne de connexion est réalisée sous la forme de boulon fileté (3) avec une tête de boulon (10), ladite tête de boulon (10) ayant un diamètre plus élevé par référence au tronçon fileté,
- le corps isolant (11) est réalisé en forme de douille avec un diamètre intérieur approprié pour recevoir le boulon fileté (3), de sorte que la tête de boulon (10) s'applique contre le corps isolant (11) dans la situation de montage,
- il est prévu un corps de base ou une plaque de base (1) avec un prolongement à pas de vis (13) complémentaire du capuchon à visser (2) avec un pas de vis intérieur ou extérieur, dans lequel la plaque de base (1) ou le corps de base comporte une ouverture traversante afin de recevoir le corps isolant (11) en forme de douille en une ou en plusieurs pièces, et de sorte qu'il résulte un agencement essentiellement concentrique du boulon fileté (3), du corps isolant (11) et de l'ouverture traversante de la plaque de base (1), et
- le capuchon à visser (2) possède une surface de contact (14) tournée vers la cavité intérieure (16) en direction de la tête de boulon (10), et la surface de contact d'une part et la tête de boulon (10) d'autre part sont réalisées en vue de venir en contact avec les surfaces de contact du limiteur de tension.

2. Dispositif selon la revendication 1,
**caractérisé en ce qu'**un capuchon à pression (6) isolant et doté d'une traversée pour l'enfiler sur le boulon fileté (3) est réalisé, de sorte qu'un tronçon de la partie d'installation respective à protéger est susceptible d'être fixé et mis en contact électrique entre le capuchon à pression (6) et la plaque de base (1).

3. Dispositif selon la revendication 1 ou 2,
**caractérisé en ce que**, dans la situation de montage, la tête de boulon (10) s'applique contre un premier côté d'un bourrelet périphérique (12) du corps isolant (11).

4. Dispositif selon la revendication 1, 2 ou 3,
**caractérisé en ce que** le corps isolant en forme de douille (11) vient, avec son second côté du bourrelet périphérique (12), en contact avec un tronçon du côté frontal du prolongement à pas de vis (13).

5. Dispositif selon la revendication 1 à 4,
**caractérisé en ce que** le diamètre extérieur du corps isolant (11) en forme de douille correspond à un perçage de fixation à ménager dans la partie d'installation ou existant à cet endroit.

6. Dispositif selon la revendication 3,
**caractérisé en ce que** le corps isolant en forme de douille (11) possède une collerette (15) qui s'étend depuis le bourrelet en direction de la saillie du capuchon à visser (2) et formant une paroi d'isolation.

7. Dispositif selon l'une des revendications précédentes,
**caractérisé en ce que** le prolongement à pas de vis (13) de la plaque de base (1) comporte un pas de vis extérieur et le capuchon à visser (2) comporte un pas de vis intérieur complémentaire de celui-ci, ou inversement.

8. Dispositif selon l'une des revendications précédentes,
**caractérisé en ce que**, pour la fixation, un premier écrou de fixation (17) est monté sur le boulon fileté (3), et le tronçon restant du boulon fileté sert à recevoir une cosse de câble ou similaire et un second écrou de fixation (9).

9. Dispositif selon l'une des revendications précédentes,
**caractérisé en ce qu'**une surface à clé est réalisée dans ou sur la tête du capuchon à visser.

10. Dispositif selon la revendication 9,
**caractérisé en ce que** la surface à clé est réalisée sous forme d'empreinte polygonale intérieure (18).

11. Dispositif selon l'une des revendications précédentes,
**caractérisé en ce que**, au moyen d'un déplacement du capuchon à pression isolant (5) par rapport à sa position vis-à-vis du boulon fileté (3) ou vis-à-vis du corps isolant en forme de douille (11), il se produit une adaptation à différentes dimensions du tronçon de fixation de l'installation respective à protéger.

12. Dispositif selon la revendication 1,
**caractérisé en ce que**, pour un mode de réalisation du corps isolant (11) en deux pièces, celui-ci est constitué d'un premier corps de douille (100) avec un bourrelet extérieur (101) et d'un second corps de douille (102) avec un bourrelet intérieur (103).

13. Dispositif selon la revendication 1 et 12,
**caractérisé en ce que** le corps de base est formé comme un couvercle (104) avec une section transversale en forme de U, et une surface à clé, et il est prévu sur la paroi intérieure du couvercle un pas de vis qui est complémentaire d'un pas de vis extérieur du capuchon à visser (105).

14. Dispositif selon l'une des revendications précédentes,
**caractérisé en ce que** le capuchon à visser (2), la plaque de base (1) et le boulon fileté (3) avec la tête de boulon (10) sont réalisés en un matériau conducteur.
